(19) Europäisches Patentamt
European Patent Office
Office européen des brevets

(11) Publication number: 0 175 546 B1

(12) # EUROPEAN PATENT SPECIFICATION

(45) Date of publication of patent specification: 05.07.89

(51) Int. Cl.[4]: **C 08 K 13/02**, C 08 L 23/02 // (C08K13/02, 3:38, 5:13)

(21) Application number: 85306455.8

(22) Date of filing: 11.09.85

(54) **Stabilizing composition & method of stabilizing organic substances.**

(30) Priority: 14.09.84 GB 8423292
29.10.84 GB 8427332

(43) Date of publication of application:
26.03.86 Bulletin 86/13

(45) Publication of the grant of the patent:
05.07.89 Bulletin 89/27

(84) Designated Contracting States:
AT DE FR GB IT LU NL SE

(56) References cited:
GB-A-1 244 168
US-A-3 086 963
US-A-3 413 260
US-A-4 360 623

(73) Proprietor: MORTON THIOKOL, INC.
110 North Wacker Drive
Chicago Illinois 60606-1560 (US)

(72) Inventor: Sanglet, Philippe R.
Violette Straat 114
B-9600 Gent (BE)

(74) Representative: Bankes, Stephen Charles Digby et al
BARON & WARREN 18 South End Kensington
London W8 5BU (GB)

EP 0 175 546 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relátes to a stabilizing composition for organic substances and is particularly applicable to the prevention of yellowing and degradation of polymers such as polyolefins containing a sterically hindered phenol as an antioxidant.

Polyolefins such as polyethylene and polypropylene are commonly stabilized with a hindered phenol.

The first hindered phenol antioxidant was the well-known product butylated hydroxytoluene or BHT (2,6-di-tertiary-butyl p-cresol):

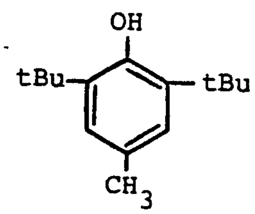

BHT and its simple variants are sometimes termed "Monophenolic" antioxidants. BHT is still the most widely used member of the phenolic class. Another example of this class is 2-[and 3]-tert-butyl-4-methoxyphenol(butylated hydroxy-anisole or BHA).

These compounds are useful in preventing heat degradation of the polymer. Unfortunately, compounds such as BHT also tend to cause yellowing of the polymer.

The mechanism by which this yellowing occurs is not certain, but it is thought that it may be due to a free radical reaction occurring when the BHT donates hydrogen to prevent polymer radical formation resulting from thermal degradation of the polymer chain. Such a reaction could yield a large number of products, some of which, such as a quinone methide dimer, impart a yellow colour to the polymer. Another possibility is that BHT may, after being oxidised, undergo an elimination-addition reaction with $NO_x$ or other nitrogen-containing gases whereby the methyl group of BHT is replaced by a nitro group. This reaction would give a slightly yellow product.

Attempts have been made to prevent this yellowing by adding secondary stabilizers such as phosphites and thioesters together with the BHT. In US—A—3887477 hydrazine is used in conjunction with 2,6-di-t-butyl phenol to stabilize polyolefins against degradation by oxygen, heat and light. In US—A—4454270, polyolefins protected by various antioxidants such as BHT are additionally protected against discolouration by the addition of various amines such as triisopropanolamine, bipyridines and N,N-bis-(2-hydroxymethyl) soyaamine.

According to the present invention, there is provided a stabilizing composition comprising sodium borohydride (SBH) and a hindered phenol antioxidant such as BHT.

The invention also provides a method preventing discolouration of a substance stabilized with a hindered phenol compound, which comprises adding SBH to said substance before, during or after the incorporation of the hindered phenol compound.

There are various ways of incorporating the stabilizing components in a substance such as a polyolefin. According to one method, an olefin is solution-polymerised in an organic solvent such as hexane, the stabilizing components are mixed into the polymerisate and the solvent is removed by flashing off. Alternatively, one or both of the hindered phenol and SBH can be added to molten polyolefin.

The hindered phenol and the SBH can be added together or separately. For example the hindered phenol can be added at the polymerization stage and the SBH added to the molten polymer.

Sodium borohydride ($NaBH_4$) is a strong reducing agent which can prevent heat degradation of a polymer and/or regenerate the hindered phenol, thus preventing the formation of yellow products such as the quinone methide.

The amount of SBH to be incorporated will generally depend on the amount of hindered phenol present. When BHT is used, the ratio of SBH to BHT is preferably in the range from 0.01:1 to 2:1 by weight, typically 0.1:1. In view of the cost of SBH, lower ratios such as 0.05:1 may be preferred in many cases, and in many applications much lower ratios may be sufficient.

For stabilizing polymers such as polyolefins, the total content of SBH based on the polymer is preferably in the range from 0.001 to 0.2 wt% in the final mix.

The SBH may also be incorporated into a master batch of the polymers in which the proportions of both stabilizing components will be correspondingly higher. A master batch is usually mixed with about 5 to 15 times its weight of further polymer, typically about 10 times its weight, so that the stabilizing components can be incorporated in the master batch in amounts about 10 times higher than are required in the final mix.

It has been found that SBH is most effective in preventing the yellowing commonly found in polyolefins stabilized with BHT.

The invention will be further illustrated in the following examples.

### Example 1

To test the stability of BHT in the presence of SBH, small amounts of benzoylperoxide as a radical initiator were added to two test tubes containing samples of BHT. One of the tubes also contained SBH. Both samples were kept for 24 hours in an oven to keep them liquid. The sample containing SBH remained colourless, while the sample of BHT alone turned yellow.

This example demonstrates that SBH is inherently capable of preventing discolouration of a hindered phenol during radical formation. Thus, while the invention is primarily intended for the stabilization of polyolefins it could also be applied to other organic materials such as plastics, rubbers, petroleum products, fats and oils.

### Example 2

This example compares the performance of well known commercial secondary antioxidants for BHT-stabilized polypropylene, such as phosphite and DSTDP thioester with sodium borohydride (SBH).

Extruded polypropylene films were prepared containing the various antioxidant stabilizer systems. The effectiveness of the systems was determined by measuring resistance to polymer degradation, such as yellowness and whiteness index and melt index.

### Sample Preparation

Dry blend formulations were prepared by blending unstabilized powdered polypropylene with BHT, antioxidants and calcium stearate processing aid in a Henschel mixer for two minutes. The finished dry blends were stored in plastic bags overnight prior to extrusion processing into pellets and then into 3½ inch (8.9 cm) ribbon strips. The low levels of SBH were introduced via a 10% dry blend concentrate prepared by diluting SBH with the same powdered polypropylene used to prepare the ribbon samples. Mixing was also done in the Henschel for two minutes.

| Sample No. | % Calcium Stearate | % Hercules 6301 Polyprop. | % BHT | TNPP Phos-phite | % SBH | % Synergist DSTDP |
|---|---|---|---|---|---|---|
| 1 | 1 | 99.00 | 0 | 0 | 0 | 0 |
| 2 | 1 | 98.90 | 0.1 | 0 | 0 | 0 |
| 3 | 1 | 98.80 | 0.1 | 0.1 | 0 | 0 |
| 4 | 1 | 98.89 | 0.1 | 0 | 0.01 | 0 |
| 5 | 1 | 98.70 | 0.1 | 0 | 0 | 0.2 |

NOTES:
1. Polypropylene 6301 is a powdered unstabilized grade from Hercules with a reported melt index of 12.
2. TNPP is a tris-nonylphenol phosphite (secondary antioxidant).
3. DSTDP is distearyl thiodipropionate (secondary antioxidant-thioester).

*Extrusion Processing*

Polypropylene dry blends were extruded into ⅛ inch (3.2 mm) pellets. A 3½ inch (8.9 cm) ribbon was extruded from the pellets during the first pass and the 5th pass through the extruder. The following conditions were used during pellet extrusion and during extrusion into ribbon.

Temperature settings — 210, 210, 210, 220°C.
RPM — 175
Dies — ⅛" (3.2 mm) rod or 3½" (8.9 cm) ribbon.
Cooling water: hopper — ON
Extruder type — single screw, ¾ inch (19 mm) barrel.
Screw type — 3 stage.
L/D — 24:1.
Manufacturer — Haake, Inc.

*Yellowness-Whiteness Index*

Polypropylene samples were measured using a Hunter Lab D25A-9 colorimeter [CIE 1931 CIE 2° Standard Observer, CIE Illuminant C (daylight)] for two yellowness indices and a whiteness index ($YI_1$ = ASTM D1925, $YI_2$ = ASTME 313, WI = ASTME313). Only the $YI_1$ values are reported.

The analysis is in two parts due to the directional makeup of the samples. The "with" direction was with the sample length parallel to the illumination beams (2) and the "against" was with the sample length perpendicular to the illumination beams. Five measurements were taken per sample, per direction and averaged.

*Melt Index*

Melt index work was performed at the University of Lowell. The test conditions are as follows:
Material: Polypropylene with stabilizing additives and processing aid.
Reference: ASTM D1238—79.
Condition L.
Temperature 230°C.
Total load 2160 grams.
Approximate Pressure: 43.25 psi (298.2 kPa).
Cylinder diameter: 9.5504 mm.
Die diameter: 2.0955 ± 0.0051 mm.
Preheat Time: 2 minutes and 6 minutes.
Discharge Time: 15 seconds.
Test Time Interval: 15 seconds.

*Results*

Yellowness-Whiteness-Melt Index
Polypropylene* Stability after Extrusions

| Sample X Extrusion | Hunter Yellowness** $YI_1$ | Hunter** Whiteness | g/10 min Melt Flow*** | Sample Description |
|---|---|---|---|---|
| 1 × 1 | 4.4 | 63.9 | 27 | Controls with |
| 1 × 5 | 11.4 | 43.9 | 42 | no stabilizers |
| 2 × 1 | 5.6 | 61.3 | 17 | BHT Stabilizer |
| 2 × 5 | 8.8 | 51.7 | 21 | only |
| 3 × 1 | 5.0 | 62.7 | 15 | BHT + Phosphite |
| 3 × 5 | 6.6 | 59.2 | 18 | Stabilizer |
| 4 × 1 | 3.1 | 70.2 | 17 | BHT + SBH |
| 4 × 5 | 5.6 | 61.2 | 17 | |
| 5 × 1 | 4.8 | 62.2 | 18 | BHT + DSTDP |
| 5 × 5 | 6.5 | 58.1 | 23 | Synergist |

*All polypropylene samples contain 1% calcium stearate as a processing aid.
**Average of 5 readings with the grain and 5 readings against the grain of the sample.
***Average of 2 conditions (2 min. preheat time and 6 min. preheat time).
NOTE: *Sample Number System* First digit is the sample number, the second digit is the number of extrusions. For example a sample numbered 2 × 1 indicates sample number 2 extruded once. A sample numbered 3 × 5 indicates sample number 3 extruded 5 times.

Low levels of sodium borohydride (SBH at 0.01%) retarded colour development and polymer degradation of BHT-treated polypropylene compounds. When compared to the more common commercial secondary antioxidants, such as phosphite and DSTDP thioester, low levels of SBH showed good performance in reducing yellowness development, improving loss of whiteness and retarding actual polymer breakdown or chain scission.

Example 3

A series of tests were carried out to demonstrate the synergistic effect of SBH with BHT.

Various polyethylene let downs were prepared by ESSO CHEMPLASTICS of Meerhout, Belgium, containing varying amounts of SBH and BHT.

BHT was usually added in the form of a master batch 5% SBH was prepared for easy incorporation of

SBH in the polymer.

Recommended SBH addition rates (0—300 ppm) were combined with various amounts of BHT.

Nine sample sheets were prepared.

Samples 1—5: containing the normally recommended BHT addition of 100—200 ppm.

Samples 6—9: 1% BHT.

The amounts of SBH are shown in the following table.

| BHT 100—200 ppm SBH | | BHT — 1% (10,000 ppm) SBH | |
|---|---|---|---|
| 1. | 0 ppm | 6. | 0 ppm |
| 2. | 75 ppm | 7. | 2500 ppm |
| 3. | 150 ppm | 8. | 5000 ppm |
| 4. | 225 ppm | 9. | 7500 ppm |
| 5. | 300 ppm | | |

The 9 sheets were placed for 24 hours in a $NO_x$ atmosphere.

The untreated sample 1 showed slight yellowing. This was reduced in sample 2 and eliminated in samples 3 to 5.150 ppm therefore appeared as the optimum content of SBH for a 100—200 ppm BHT content.

In sample 6 the high content of BHT resulted in considerable yellowing, but a remarkable and progressive improvement was found in samples 7 to 9. The invention is therefore particularly useful for the colour-stabilization of polymers in applications where a high content of hindered phenol antioxidant is required.

**Claims**

1. A stabilizing composition for organic materials which includes a hindered phenol antioxidant, characterised in that it also includes sodium borohydride (SBH).

2. A stabilizing composition according to claim 1 characterised in that the hindered phenol antioxidant is 2,6-di-t-butyl p-cresol (BHT), 2-t-butyl-4-methoxy phenol or 3-t-butyl-4-methoxy phenol.

3. A stabilizing composition according to claim 2 characterised in that the hindered phenol antioxidant is BHT and the weight ratio of SBH to BHT is in the range from 0.01:1 to 2:1.

4. A method of preventing discolouration of an organic substance stabilized with a hindered phenol antioxidant, characterised in that sodium borohydride is added to said organic substance before, during or after the incorporation of the hindered phenol antioxidant.

5. A method according to claim 4 characterised in that said organic substance is a polymer.

6. A method according to claim 5 characterised in that the polymer is a polyoefin.

7. A method according to claim 6 characterised in that the polymer is polyethylene or polypropylene.

8. A method according to any one of claims 5 to 7 characterised in that the total content of SBH based on the polymer is in a range from 0.001 to 0.2% by weight.

9. A method according to claim 8 wherein the SBH is incorporated in a master batch of the polymer in a proportion higher than is required in the eventual polymer composition and the master batch is subsequently mixed with further polymer to give a final mix containing 0.001 to 0.2 wt% of SBH.

10. A polymer composition comprising a polymer stabilized with a hindered phenol antioxidant, characterised in that it also contains sodium borohydride (SBH).

11. A polymer composition according to claim 10, characterised in that the hindered phenol antioxidant is 2,6-di-t-butyl-p-cresol (BHT), 2-t-butyl-4-methoxy phenol or 3-t-butyl-4-methoxy phenol.

12. A polymer composition according to claim 11, characterised in that the hindered phenol antioxidant is BHT and the weight ratio of SBH to BHT is in the range from 0.01:1 to 2:1.

13. A polymer composition according to any one of claims 10 to 12, characterised in that the polymer is a polyolefin.

14. A polymer composition according to claim 13, characterised in that the polymer is polyethylene or polypropylene.

15. A polymer composition according to any one of claims 10 to 14, characterised in that the total content of SBH based on the polymer is in a range from 0.001 to 0.2% by weight.

**Patentansprüche**

1. Stabilisierende Zusammensetzung für organische Materialien, die ein gehindertes Phenol-Antioxidans enthält, dadurch gekennzeichnet, daß sie auch Natriumborhyrid (SBH) enthält.

2. Stabilisierende Zusammensetzung nach Anspruch 1, dadurch gekennzeichnet, daß das gehinderte Phenol-Antioxidans 2,6-Di-tert-butyl-p-cresol (BHT), 2-tert-Butyl-4-methoxyphenol oder 3-tert-Butyl-4-methoxyphenol ist.

3. Stabilisierende Zusammensetzung nach Anspruch 2, dadurch gekennzeichnet, daß das gehinderte Phenol-Antioxidans BHT ist und das Gewichtsverhältnis von SBH zu BHT im Bereich von 0,01:1 bis 2:1 liegt.

4. Verfahren zur Verhinderung der Verfärbung einer mit einem gehinderten Phenol-Antioxidans stabilisierten organischen Substanz, dadurch gekennzeichnet, daß zu der organischen Substanz vor, während oder nach der Einarbeitung des gehinderten Phenol-Antioxidans Natriumborhydrid zugegeben wird.

5. Verfahren nach Anspruch 4, dadurch gekennzeichnet, daß die organische Substanz ein Polymer ist.

6. Verfahren nach Anspruch 5, dadurch gekennzeichnet, daß das Polymer ein Polyolefin ist.

7. Verfahren nach Anspruch 6, dadurch gekennzeichnet, daß das Polymer Polyethylen oder Polypropylen ist.

8. Verfahren nach einem der Ansprüche 5 bis 7, dadurch gekennzeichnet, daß der Gesamtgehalt an SBH, bezogen auf das Polymer, im Bereich von 0,001 bis 0,2 Gew.-% liegt.

9. Verfahren nach Anspruch 8, bei dem das SBH in einen Grundansatz des Polymers in einem größeren Mengenanteil eingearbeitet wird, als in der letztlichen Polymerzusammensetzung erforderlich ist, und daß der Grundansatz anschließend mit weiterem Polymer vermischt wird, um ein Endgemisch zu ergeben, das 0,001 bis 0,2 Gew.-% SBH enthält.

10. Polymerzusammensetzung, die ein mit einem gehinderten Phenol-Antioxidans stabilisiertes Polymer umfaßt, dadurch gekennzeichnet, daß sie auch Natriumborhydrid (SBH) enthält.

11. Polymerzusammensetzung nach Anspruch 10, dadurch gekennzeichnet, daß das gehinderte Phenol-Antioxidans 2,6-Di-tert-butyl-p-cresol (BHT), 2-tert-Butyl-4-methoxyphenol oder 3-tert-Butyl-4-methoxyphenol ist.

12. Polymerzusammensetzung nach Anspruch 11, dadurch gekennzeichnet, daß das gehinderte Phenol-Antioxidans BHT ist und das Gewichtsverhältnis von SBH zu BHT im Bereich von 0,01:1 bis 2:1 liegt.

13. Polymerzusammensetzung nach einem der Ansprüche 10 bis 12, dadurch gekennzeichnet, daß das Polymer ein Polyolefin ist.

14. Polymerzusammensetzung nach Anspruch 13, dadurch gekennzeichnet, daß das Polymer Polyethylen oder Polypropylen ist.

15. Polymerzusammensetzung nach einem der Ansprüche 10 bis 14, dadurch gekennzeichnet, daß der Gesamtgehalt an SBH, bezogen auf das Polymer, im Bereich von 0,001 bis 0,2 Gew.-% liegt.

**Revendications**

1. Composition stabilisante pour matières organiques qui comprend un phénol à empêchement stérique antioxidant, caractérisée en ce qu'elle comprend aussi du borohydrure de sodium (SBH).

2. Composition stabilisante suivant la revendication 1, caractérisée en ce que le phénol à empêchement stérique antioxydant est le 2,6-di-t-butyl-p-crésol (BHT), le 2-t-butyl-4-méthoxyphénol ou le 3-t-butyl-4-méthoxyphénol.

3. Composition stabilisante suivant la revendication 2, caractérisée en ce que le phénol à empêchement stérique antioxydant est le BHT et le rapport pondéral SBH:BHT se situe dans l'intervalle de 0,01:1 à 2:1.

4. Procédé pour prévenir l'altération de coloration d'une substance organique stabilisée par un phénol à empêchement stérique antioxydant, caractérisé en ce qu'on ajoute du borohydrure de sodium à la substance organique avant, pendant ou après l'incorporation du phénol à empêchement stérique antioxydant.

5. Procédé suivant la revendication 4, caractérisé en ce que la substance organique est un polymère.

6. Procédé suivant la revendication 5, caractérisé en ce que le polymère est un polyoléfine.

7. Procédé suivant la revendication 6, caractérisé en ce que le polymère est le polyéthylène ou le polypropylène.

8. Procédé suivant l'une quelconque des revendications 5 à 7, caractérisé en ce que la quantité totale en SBH, sur base du polymère, se situe dans l'intervalle de 0,001 à 0,2% en poids.

9. Procédé suivant la revendication 8, caractérisé en ce que le SBH est incorporé à un mélange maître du polymère en une proportion plus élevée que celle requise dans la composition de polymère final et le mélange maître est ensuite mélangé avec un supplément de polymère pour conduire à un mélange final contenant 0,001 à 0,2% en poids de SBH.

10. Composition de polymère comprenant un polymère stabilisé par un phénol à empêchement stérique antioxydant, caractérisée en ce qu'elle contient aussi du borohydrure de sodium (SBH).

11. Composition de polymère suivant la revendication 10, caractérisée en ce que le phénol à empêchement stérique antioxydant est le 2,6-di-t-butyl-p-crésol (BHT), le 2-t-butyl-4-méthoxyphénol ou le 3-t-butyl-4-méthoxyphénol.

12. Composition de polymère suivant la revendication 11, caractérisée en ce que le phénol à

empêchement stérique antioxidant est le BHT et le rapport pondéral SBH BHT est situé dans l'intervalle de 0,01:1 à 2:1.

13. Composition de polymère suivant l'une quelconque des revendications 10 à 12, caractérisée en ce que le polymère est une polyoléfine.

14. Composition de polymère suivant la revendication 13, caractérisée en ce que le polymère est le polyéthylène ou le polypropylène.

15. Composition de polymère suivant l'une quelconque des revendications 10 à 14, caractérisée en ce que la quantité totale de SBH, sur base du polymère, est située dans l'intervalle de 0,001 à 0,2% en poids.